# EUROPEAN PATENT APPLICATION

(11) **EP 3 106 264 A1**
(43) Date of publication of application: **21.12.2016**
(21) Application number: 16152217.2
(22) Date of filing: 21.01.2016
(51) Int. Cl.: B25B 7/02, B25B 7/04, B25B 7/08, A01K 95/02

(54) **PLIERS FOR DISTORTION PREVENTION TOOL**

(30) Priority: 16.06.2015 KR 20150085377
(71) Applicant: Kim, Il Han, Dalseo-gu 704-832 (KR)
(72) Inventor: Kim, Il Han, Dalseo-gu 704-832 (KR)
(74) Representative: RGTH

(57) **Abstract**

The present disclosure relates to distortion-tolerant split ring pliers (100) for a wide range of applications, the multipurpose pliers including a pivot section (20), a pair of handle sections (30A, 30B) connected to the pivot section (20) on one direction, and a pair of lever sections (10A, 10B) connected to the pivot section (20) on an opposite direction to the one direction, wherein at least one of the pair of handle sections (30A, 30B) and the pair of lever sections (10A, 10B) includes distortion prevention parts (16, 31) adjacent to the pivot section (20), and the distortion prevention parts (16, 31) are formed such that a pair of partial circular plates (16A, 16B; 31A, 31B) face each other.

## Description

### [Technical Field]

The present disclosure relates to multipurpose pliers, and more particularly, to multipurpose pliers for a fishing line.

### [Background Art]

Pliers are a hand tool used to hold objects firmly, possibly developed from tongs used to handle hot metal in Bronze Age Europe.

The pliers are used for bending, compressing or cutting objects made from a wide range of materials, and they consist of a pair of lever sections on one side of a pivot and a pair of handle sections on the other side, allowing a force applied to the handle to move the lever sections around the pivot.

The force acts on the lever sections and the handle across the pivot which serves as a fulcrum.

The present disclosure relates to pliers into which many functions required in preparation for fishing with traditional pliers are integrated, but the present disclosure is not limited to fishing and may be used in a wide range of fields.

In preparation for fishing, various functions are needed, for example, a function of cutting a fishing line such as, for example, a polyethylene line (fishing line), a carbon line and a nylon line, or cutting a wire and a line including a wire, and a function of attaching a fishing bait and a fishing hook to a split ring, and the present disclosure relates to pliers having these various functions.

Fishing pliers such as the present disclosure are disclosed in Utility Model Registration Nos. 20-0202732 and 20-0296965, but the related arts do not describe a distortion prevention function and a function for split rings.

### [Disclosure]

### [Technical Problem]

The present disclosure is directed to providing pliers into which many functions required in preparation for fishing with traditional pliers are integrated, in particular, pliers intended for use in attaching a fishing artificial bait or a fishing hook to a split ring.

Also, the pliers of the present disclosure are designed to resist a twisting force occurring while opening up rings of a split ring or a twisting force occurring while cutting a fishing line.

Also, the pliers of the present disclosure are designed to resist a twisting force occurring while using the pliers for many purposes as well as a twisting force occurring while opening a split ring.

Also, the pliers of the present disclosure are designed to easily replace a worn part.

Also, the pliers of the present disclosure are designed to operate in a lightweight and easy manner.

### [Technical Solution]

The present disclosure provides distortion-tolerant split ring pliers 100 for a wide range of applications, the multipurpose pliers including a pivot section 20, a pair of handle sections 30A and 30B connected to the pivot section 20 on one direction, and a pair of lever sections 10A and 10B connected to the pivot section 20 on an opposite direction to the one direction, wherein at least one of the pair of handle sections 30A and 30B and the pair of lever sections 10A and 10B includes distortion prevention parts 16 and 31 adjacent to the pivot section 20, and the distortion prevention parts 16 and 31 are formed such that a pair of partial circular plates 16A and 16B and 31A and 31B face each other.

Also, in the present disclosure, the pivot section 20 includes a first pivot section 20A including a first hole 20Aa, a second pivot section 20B including a second hole 20Bb, a first pivot member 20D which is inserted into the first hole 20Aa, and a second pivot member 20C which is inserted into the second hole 20Bb, the first pivot member 20D and the second pivot member 20C are assembled to form a pivot center, the first hole 20Aa and a part of the first pivot member 20D which is inserted into the first hole have a circular shape and the second hole 20Bb and a part of the second pivot member 20C which is inserted into the second hole have a shape that relative rotation to each other is impossible, and only the first pivot member 20A is rotatable around the pivot center formed by the first pivot member 20D and the second pivot member 20C, and thus, the lever section 10A and the handle 30A connected to the first pivot member 20A can rotate around the pivot center and the lever section 10B and the handle 30B connected to the second pivot member 20B cannot rotate around the pivot center.

Also, in the present disclosure, the lever section 10 further includes a distortion prevention part 13, and the distortion prevention part 13 may include a pin 13A formed on one of the pair of lever sections 10A and 10B and an accommodating hole formed on the other to accommodate the pin.

Also, in the present disclosure, a pair of split ring insertion parts 11 and concave-convex parts 12 integrally formed are respectively inserted and assembled into bottom surfaces of the pair of lever sections 10A and 10B, and each of the pair of split ring insertion parts 11 and concave-convex parts 12 integrally formed has guide grooves 12F and the bottom surfaces of each of the pair of lever sections 10A and 10B have guide protrusions 12E, so after assembly, sway is prevented by insertion of the guide protrusions 12E into the guide grooves 12F.

The split ring insertion parts 11 and the concave-convex parts 12 may be replaced with a tool tip for other purposes, and the replaceable tool tip also has guide grooves 12F, so when the tool tip is assembled into the bottom surfaces of the lever sections 10A and 10B, sway is prevented by insertion of the guide protrusions 12E of the lever section bottom surfaces into the guide grooves 12F.

### [Advantageous Effects]

The multipurpose pliers of the present disclosure have the split ring insertion part in the lever section to open up rings of a split ring, thereby easily attaching a fishing hook or an artificial bait to the split ring.

Also, the multipurpose pliers of the present disclosure are not limited to fishing products and can be used for other products using split rings.

Also, the multipurpose pliers of the present disclosure have the distortion prevention part in at least one of the lever section and the handle section, thereby resisting a twisting force that occurs during various works, for example, during opening up rings of a split ring or cutting a fishing line.

Also, parts more likely to wear out in the pliers of the present disclosure are connected via screw coupling, allowing for easy replacement.

Also, the pliers of the present disclosure have the plurality of through-holes and the concave and convex curves in the handle, thereby reducing the weight and facilitating work.

### [Description of Drawings]

Fig. 1 is a top view of multipurpose pliers of the present disclosure.
Fig. 2 is an exploded view of multipurpose pliers of the present disclosure.
Fig. 3 is an exploded view of multipurpose pliers of the present disclosure.
Fig. 4 is an enlarged perspective view of pivot members 20C and 20D of a pivot section of the present disclosure.
Fig. 5 is a diagram showing operation of multipurpose pliers of the present disclosure.
Fig. 6a is an enlarged view of a split ring insertion part of multipurpose pliers of the present disclosure.
Figs. 6b through 6d are diagrams showing an operation process of a split ring insertion part of the present disclosure.
Figs. 7a and 7b are diagrams showing a method of attaching an artificial bait to a split ring using multipurpose pliers of the present disclosure.
Fig. 8 is an enlarged view of distortion prevention parts 16 and 31 of multipurpose pliers of the present disclosure.
Fig. 9 shows a bottom surface of a lever section into which a split ring insertion part 11 and a concave-convex part 12 of the present disclosure are inserted and assembled.
Fig. 10a is a diagram showing that a tapered portion 11A, a bottom support portion 11B, and a convex forming portion 11C are formed integrally with a concave-convex part 12 which are then inserted into a lever section.
Fig. 10b shows that a concave forming portion 11D and a split ring retaining portion 11E are formed integrally with a concave-convex part 12 which are then inserted into a lever section.
Fig. 10c shows a split ring 200 resting on a split ring insertion part 10.
Fig. 11 is a diagram of a fishing hook adjustment part.
Fig. 12 is a diagram showing adjustment of a fishing hook.

**[Detailed Description of Main Elements]**

| | |
|---|---|
| 100: Multipurpose pliers | 10: Lever section |
| 20: Pivot section | 30: Handle section |
| 11: Split ring insertion part | 12: Concave-convex part |
| 13: Distortion prevention part | 14: Line cutter part |
| 15: Wire cutter part | 40: Grease supply part |
| 31: Distortion prevention part | 32: Through-hole |

### [Best Mode]

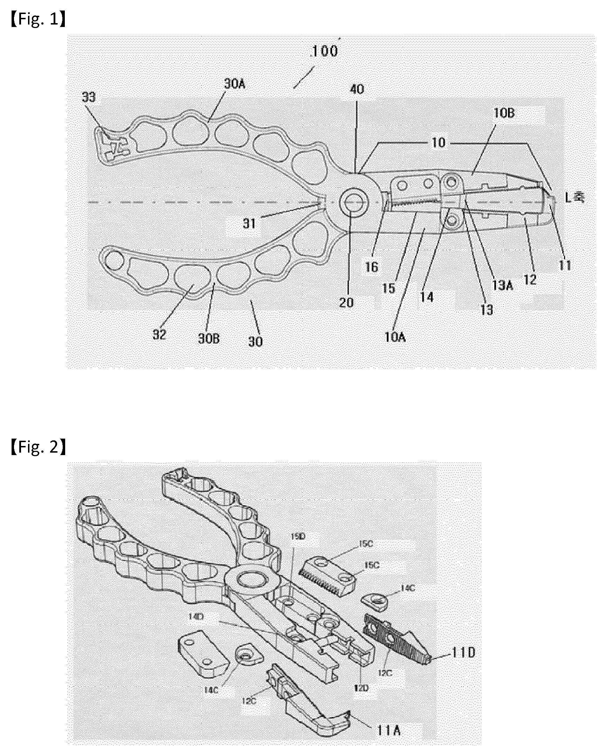

Fig. 1 is a top view of multipurpose pliers of the present disclosure.

The multipurpose pliers of the present disclosure includes a lever section 10 on one side of a pivot section 20 and a handle 30 on the other side.

As a pair of handle sections 30A and 30B is opened or closed by an applied force, the lever section 10 is opened or closed with respect to the pivot section 20, and various functions of the lever section are performed.

As shown in Fig. 1, the lever section 10 includes a split ring insertion part 11, a concave-convex part 12, a distortion prevention part 13, a line cutter part 14, a wire cutter part 15, and a distortion prevention part 16 to provide various functions, and a grease supply part 40 is provided on the side surface of the pivot section 20, and the handle section 30 is provided with an additional distortion prevention part 31, and each function is described as follows.

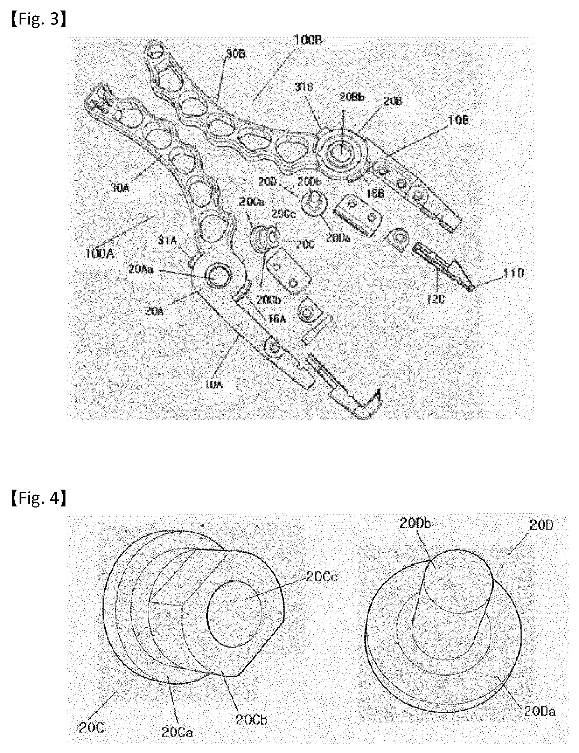

As shown in Fig. 3, the multipurpose pliers of the present disclosure includes a first body 100A including a first lever section 10A, a first pivot section 20A, and a first handle section 30A, and a second body 100B including a second lever section 10B, a second pivot section 20B, and a second handle section 30B, a first pivot member 20D is inserted into a first hole 20Aa of the first pivot section 20A and a second pivot member 20C is inserted into a second hole 20Bb of the second pivot section 20B, and a cylindrical protrusion 20Dd of the first pivot member 20D is inserted into and engaged with a hole 20Cc of the second pivot member 20C.

Fig. 4 is an enlarged perspective view of the pair of first and second pivot members 20C and 20D, the first pivot member 20D has a circular plate head 20Da and the protrusion 20Db with a cylindrical shape protruding at the center of the circular plate head, and the second pivot member 20C has a circular plate head 20Ca, a protrusion 20Cb having a cross section with a circular shape truncated on both sides formed at the center of the circular plate head 20Ca, and the hole 20Cc with a circular shape at the center of the protrusion 20Cb.

Referring to Figs. 3 and 4, the second hole 20Bb of the second pivot section 20B also has the same cross section as the cross section of the protrusion 20Cb shown in Fig. 4, i.e., a cross section with a circular shape truncated on both sides, and when the second pivot member 20C is inserted into the second hole 20Bb of the second pivot section 20B, the second body 100B cannot rotate around the second pivot member 20C due to the cross sectional shape.

By contrast, the first hole 20Aa of the first pivot section 20A has the same circular cross section as the cross section of the protrusion 20Db shown in Fig. 4, and when the first pivot member 20D is inserted into the first hole 20Aa of the first pivot section 20A, the first body 100A can rotate around the first pivot member 20D because the cross section is circular in shape.

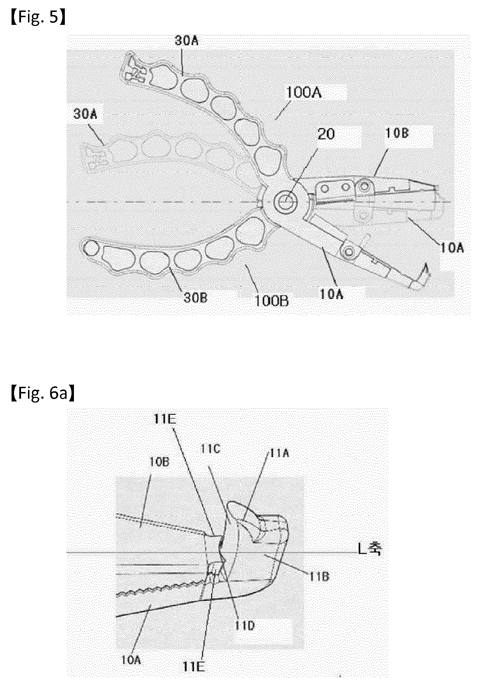

When the cylindrical protrusion 20Db of the first pivot member 20D is inserted into the circular hole 20Cd of the second pivot member 20C and assembly is completed as shown in Fig. 5, the second body 100B cannot rotate around the pivot section 20 and only the first body 100A can rotate around the pivot section 20.

The pliers such as the present disclosure are subjected to a twisting force (moment) while in use, but the present disclosure allows only one 100B of the pair of bodies 100A and 100B to move around the pivot section 20 and disallows the other 100A to move around the pivot section 20, rather than allowing all the pair of bodies 100A and 100B to move respectively, thereby reducing the degree of freedom of the pliers themselves and resisting the twisting force more efficiently.

The split ring insertion part 11 is formed at the end of the lever section 10 in a direction facing away from the pivot section 20, and has a protruding shape on one 10A of the pair of lever sections 10, protruding in a direction perpendicular to the longitudinal axis direction (L) of the multipurpose pliers, and a portion accommodating the protruding shape on the other 10B of the lever sections 10.

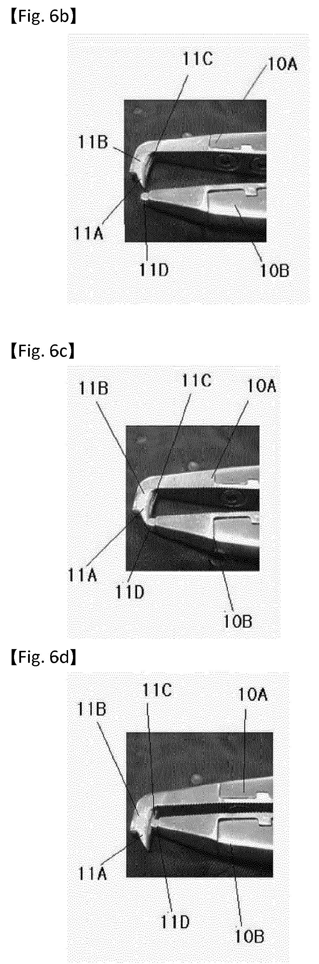

Describing the split ring insertion part 11 in more detail through Fig. 6a, the split ring insertion part 11 includes a tapered portion 11A gradually narrowing to a tip at the end of one 10A of the lever sections 10, a bottom support portion 11B having a cross section larger than or equal to a cross section of a bottom surface of the tapered portion 11A, a convex forming portion 11C on side surfaces of the tapered portion 11A and the bottom support portion 11B, a concave forming portion 11D accommodating the convex forming portion 11C at the end of the other 10B of the lever sections 10, and a split ring retaining portion 11E to retain the location of a split ring 200 on the side direction of the concave forming portion 11D.

The length of the other 10B of the pair of lever sections 10 is shorter than the length of one 10A of the lever sections having the bottom support portion 11B by the width of the bottom support portion 11B.

It can be seen from Figs. 6b through 6d that when the lever sections are closed, the convex forming portion 11C of one 10A of the lever sections 10 is closed along the concave forming portion 11D of the other 10B of the lever sections 10.

Accordingly, the convex forming portion 11C of one 10A of the lever sections 10 and the concave forming portion 11D of the other 10B of the lever sections 10 act as guide rails.

Preferably, the cross section of the tapered portion 11A and the cross section of the bottom support portion 11B are discontinuous.

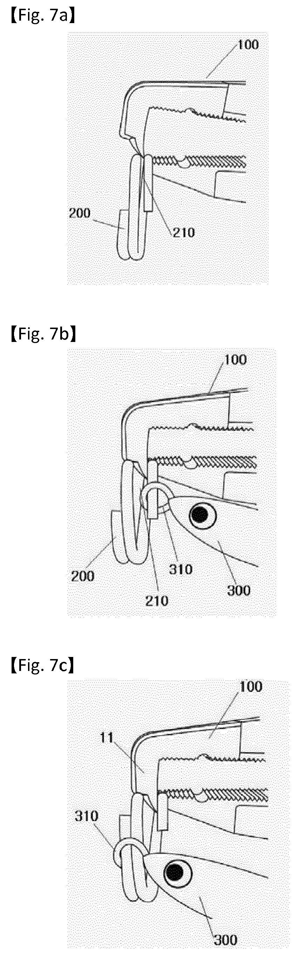

The tapered portion 11A has a pointed shape to allow for easy insertion into a gap 210 between rings of the split ring 200 wound in circular shape as shown in Fig. 7a.

When the pointed tip of the tapered portion 11A is inserted into the gap 210 between the rings of the split ring wound as shown in Fig. 7a, and subsequently, a part of the bottom support portion 11B is inserted into the split ring and the gap 210 between the rings of the split ring is widened, a ring 310 connected to an artificial bait 300 is inserted into the gap between the rings as shown in Fig. 7b.

After the ring 310 of the artificial bait 300 is inserted into the gap 210 between the rings of the split ring 200 as shown in Fig. 7b, when the ring 310 moves along the gap 210 as shown in Fig. 7c, the ring 310 of the artificial bait 300 will be connected to the split ring 200.

As described above, in the present disclosure, the split ring insertion part 11 protrudes in pointed shape in the direction perpendicular to the longitudinal axis direction (L) of the multipurpose pliers, so it can connect the ring 310 of the artificial bait 300 to the split ring 200.

The split ring insertion part 11 of the present disclosure may be preferably used in opening a split ring having an inner diameter of 3mm-12mm.

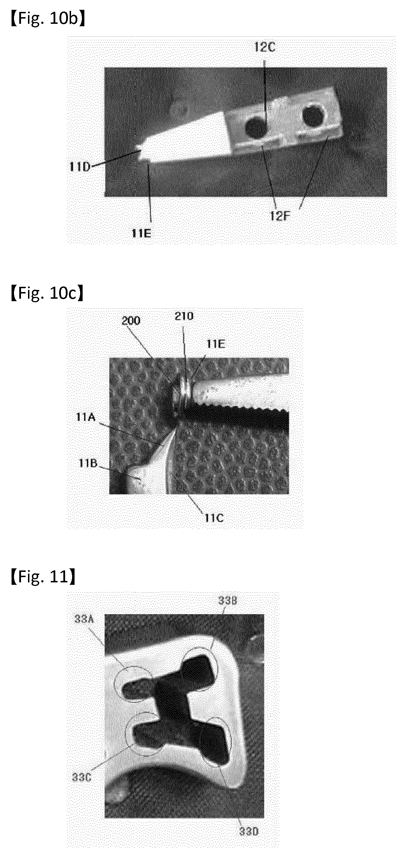

Referring to Figs. 10b and 10c, while opening up the rings of the split ring 200 by inserting the tapered portion 11A of the split ring insertion part 11 into the gap 210 between the rings, in order to retain the location of the split ring 200, the split ring retaining portion 11E is formed in the shape of a groove on both side directions from the concave forming portion 11D.

The split ring retaining portion 11E is suitable for small size split rings, for example, having an inner diameter of 3mm and the split ring retaining portion 11E may be used for larger size split rings. A gap in such split rings may be opened by the tapered portion 11A when the split rings are disposed on the split ring retaining portion 11E as shown Fig. 7c.

The tapered portion 11A of the split ring insertion part 11 may include various types, for example, a conical shape, a triangular pyramid shape, and a quadrangular pyramid shape, and likewise, the bottom support portion 11B may include various types, for example, a conical shape, a triangular pyramid shape, and a quadrangular pyramid shape.

Also, the split ring insertion part 11 of the present disclosure may be used to connect artificial baits as well as rings connected to fishing hooks and rings for other purposes. For example, the split ring insertion part 11 of the present disclosure may be used for split rings connected to key rings as well.

Although the above description illustrates that the split ring insertion part 11 has a shape protruding in the direction perpendicular to the longitudinal axis (L-axis), the pliers to which the present disclosure is applied can be used with the split ring insertion part 11 formed in the direction parallel to the longitudinal axis (L-axis) as well as the split ring insertion part 11 formed in the direction perpendicular to the longitudinal axis (L-axis), and the pliers can be also used with the split ring insertion part 11 formed in other shapes.

Also, the multipurpose pliers 100 of the present disclosure are provided with the concave-convex part 12 adjacent to the split ring insertion part (11) at a direction toward the pivot section, and the concave-convex part 12 has a plurality of concave and convex patterns to grasp hooks, split rings, and the like, without slipping.

Also, the distortion prevention part 13 is provided at a location close to the pivot section from the concave-convex part 12. The distortion prevention part 13 includes a pin 13A protruding in the direction perpendicular to the longitudinal axis (L-axis) formed on one 10A of the pair of lever sections 10, and an accommodating hole formed on the other 10B of the lever sections to accommodate the pin 13A (see Fig. 1).

When the split ring accommodating part 11 is inserted into the gap 210 between the rings of the split ring, a twisting force is applied to the multipurpose pliers, causing distortion to the multipurpose pliers, and the protruding pin 13A of the distortion prevention part 13 offsets the twisting force when inserted into the accommodating hole. The twisting force may occur from the split ring insertion part 11 and may also occur during cutting by the line cutter part 14 and the wire cutter part 15.

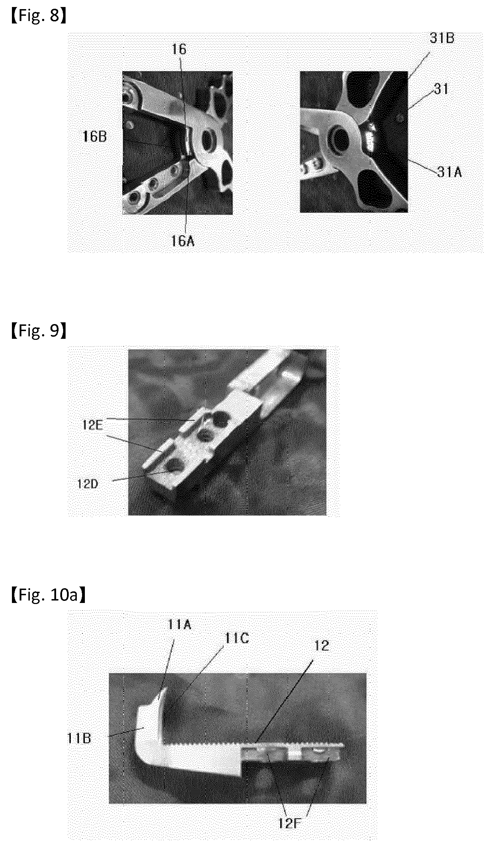

Also, the present disclosure is provided with the distortion prevention parts 16 and 31 adjacent to the pivot section 20 at the side of the lever section 10 and the handle section 30 as shown in Fig. 8.

The distortion prevention parts 16 and 31 are formed such that a pair of partial circular plates 16A and 16B, and 31A and 31B support each other and exert a force on each other to offset the twisting force applied to the multipurpose pliers.

Referring to the exploded view of Fig. 2, the pair of partial circular plates 16A and 16B and 31A and 31B of the distortion prevention parts 16 and 31 are respectively formed on the side surfaces of the first and second pivot sections 20A and 20B of the bodies 100A and 100B.

The pair of partial circular plates 16A and 16B and 31A and 31B of Fig. 2 are assembled to form the distortion prevention parts 16 and 31 with a shape shown in Fig. 8.

As described above, the present disclosure improves the life of products by installing the distortion prevention parts 13, 16, and 31 to resist the twisting force applied to the pivot section 20 of traditional multipurpose pliers.

Also, the line cutter part 14 and the wire cutter part 15 are provided adjacent to the distortion prevention part 13 of the lever section 10 in a direction toward the pivot section 20.

The line cutter part 14 has a function of cutting a fishing line, for example, a polyethylene line, a carbon line and a nylon line, and the wire cutter part 15 has a function of cutting a high hardness material such as a wire or a line including a wire.

The wire cutter part 15 has a plurality of grooves to prevent slips that may occur during cutting because of high hardness of a wire or a line including a wire which needs to be cut by the wire cutter part 15, and the wire and the line including the wire is cut when held in the grooves.

Also, referring to Fig. 2, the wire cutter part 15, the line cutter part 14, the concave-convex part 12, and the split ring insertion part 11 can be assembled and dissembled via screw coupling accomplished by holes for bolts 15C, 14C and 12C and threaded holes 15D, 14D, and 12D. In the case where the cutter part, the part having the groove, and the tapered portion of the split ring insertion part 11 become blunt while in use, it is possible to replace only the corresponding part with ease.

Fig. 9 shows the bottom surface of the pair of lever sections 10A and 10B into which the split ring insertion part 11 and the concave-convex part 12 integrally formed for each of the pair of lever sections 10A and 10B are inserted and assembled, Fig. 10a shows that the tapered portion 11A, the bottom support portion 11B, and the convex forming portion 11C are integrally formed with the concave-convex part 12 which are then assembled into the bottom surface of Fig. 9, and Fig. 10c shows that the concave forming portion 11D, and the split ring retaining portion 11E are formed integrally with the concave-convex part 12 which are then assembled into the bottom surface of the pair of lever sections 10A and 10B of Fig. 9.

The bolt hole 12C of each arrangement of Figs. 10a and 10b and the bolt hole 12D of Fig. 9 are overlapped and bolt-connected to each other, and this is the same case with the bolt holes 12C and 12D of Fig. 2.

Each arrangement of Figs. 10a and 10b has four guide grooves 12F, and the arrangement of Fig. 9 has guide protrusions 12E which are inserted into the guide holes 12F, thereby preventing sway during assembly.

Although the above description illustrates that the pair of split ring retaining portions 11E and concave-convex parts 12 integrally formed have the guide grooves 12F formed on the bottom surface and are assembled into the pair of lever sections 10A and 10B, besides the split ring retaining portions and the concave-convex parts, a tool tip useful for performing other functions may be installed and used in at least one of the pair of lever sections 10A and 10B, and the tool tip also has guide grooves 12F to prevent sway by inserting the guide protrusions 12E into the guide grooves 12F of the tool tip when the tool tip is engaged with the bottom surface of at least one of the pair of lever sections.

Also, the present disclosure has a grease insertion port installed on the side surface of the pivot section 20 to supply greases to the multipurpose pliers of the present disclosure through the grease insertion port.

Also, to reduce the total weight, the present disclosure has a plurality of through-holes 32 in the handle sections, and the handle is in such a shape that they have concave and convex curves to prevent slips while in use.

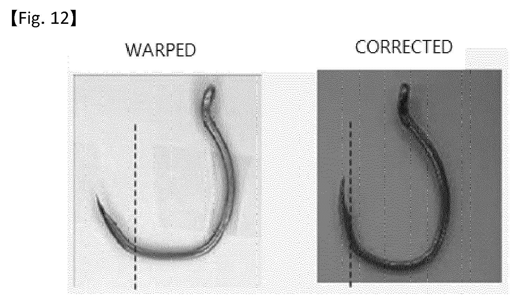

Also, the handle section 30 is further provided with a fishing hook adjustment part 33 to correct an angle of a warped fishing hook. Fig. 11 is an enlarged view of the fishing hook adjustment part 33, and a warped fishing hook is inserted into the adjustment part 33 and is then adjusted as shown in Fig. 12.

In addition, the present disclosure is preferably made of metal and sintered metal, for example, aluminum, tungsten, stainless steel, and titanium.

While the present disclosure has been hereinabove described with respect to particular features such as specific elements and a limited number of embodiments and drawings, this is only provided to help the understanding of the present disclosure more fully, and it should be understood that the present disclosure is not limited to the disclosed embodiments and various modifications and changes may be made by those skilled in the art from the foregoing description. Therefore, the present disclosure shall not be limited to the disclosed embodiments, and the appended claims, along with the full scope of equivalents to which such claims are entitled, will fall within the scope and spirit of the present disclosure.

## Claims

1. Pliers for a distortion prevention tool, the pliers comprising:
a pivot section (20);
a pair of handle sections (30A, 30B) connected to the pivot section (20) on one direction of the pivot section (20); and
a pair of lever sections (10A, 10B) connected to the pivot section (20) on an opposite direction to the one direction,
wherein at least one of the pair of handle sections (30A, 30B) and the pair of lever sections (10A, 10B) comprises distortion prevention part (16, 31) adjacent to the pivot section (20), and
the distortion prevention part (16, 31) is formed such that a pair of partial circular plates (16A, 16B; 31A, 31B) face each other.

2. The pliers for a distortion prevention tool according to claim 1, wherein the pivot section (20) comprises:
a first pivot section (20A) including a first hole (20Aa);
a second pivot section (20B) including a second hole (20Bb);
a first pivot member (20D) which is inserted into the first hole (20Aa); and
a second pivot member (20C) which is inserted into the second hole (20Bb),
the first pivot member (20D) and the second pivot member (20C) are assembled to form a pivot center,
the first hole (20Aa) and a part of the first pivot member (20D) which is inserted into the first hole have a circular shape,
the second hole (20Bb) and a part of the second pivot member (20C) which is inserted into the second hole have a shape that relative rotation to each other is impossible, and
only the first pivot member (20A) is rotatable around the pivot center formed by the first pivot member (20D) and the second pivot member (20C), and the lever section (10A) and the handle (30A) connected to the first pivot member (20A) can rotate around the pivot center and the lever section (10B) and the handle (30B) connected to the second pivot member (20B) cannot rotate around the pivot center.

3. The pliers for a distortion prevention tool according to claim 1 or 2, wherein the lever sections (10A, 10B) further comprises a distortion prevention part (13), and
the distortion prevention part (13) includes a pin (13A) formed on one of the pair of lever sections (10A, 10B) and an accommodating hole formed on the other to accommodate the pin.

4. The pliers for a distortion prevention tool according to any of the preceding claims, wherein a bottom surface of at least one of the pair of lever sections (10A, 10B) has guide protrusions (12E), and
a replaceable tool tip has guide grooves (12F), and when the replaceable tool tip is engaged with the bottom surface of at least one of the pair of lever sections (10A, 10B), sway is prevented by insertion of the guide protrusions (12E) into the guide grooves (12F).

5. The pliers for a distortion prevention tool according to any of the preceding claims, wherein a pair of split ring insertion parts (11) and concave-convex parts (12) integrally formed are respectively inserted and assembled into bottom surfaces of the pair of lever sections (10A, 10B), and
each of the pair of split ring insertion parts (11) and concave-convex parts (12) integrally formed has guide grooves (12F), the bottom surfaces of each of the pair of lever sections (10A, 10B) have guide protrusions (12E), and after assembly, sway is prevented by insertion of the guide protrusions (12E) into the guide grooves (12F).
